# EUROPEAN PATENT APPLICATION

(11) **EP 4 670 487 A1**
(43) Date of publication of application: **31.12.2025**
(21) Application number: 24185375.3
(22) Date of filing: 28.06.2024
(51) Int. Cl.: A01D 45/16

(54) **APPARATUS AND METHOD FOR PROCESSING PLANT MATERIAL**

(71) Applicant: British American Tobacco (Investments) Limited, London WC2R 3LA (GB)
(72) Inventor: SCOLARO, Jaime Luiz, Rio de Janeiro (BR); SCOLARO, Marcelo Fernando, Rio de Janeiro (BR); CRESTANI, Eleandro, Rio de Janeiro (BR); TONELI, Rodrigo, Rio de Janeiro (BR); SCREMIN, Jeronimo, Rio de Janeiro (BR)
(74) Representative: Dehns

(57) **Abstract**

An apparatus and method are provided for processing plant material to remove leaves from a plant stalk, comprising a guide means (30) configured to guide movement of the plant material relative to a plurality of rollers (10), the plurality of rollers comprising one or more counter-rotating rollers (11) for pulling leaves away from a plant stalk.

## Description

### Technical Field

The present disclosure relates to an apparatus and method for processing plant material to remove leaves from a plant stalk.

### Background

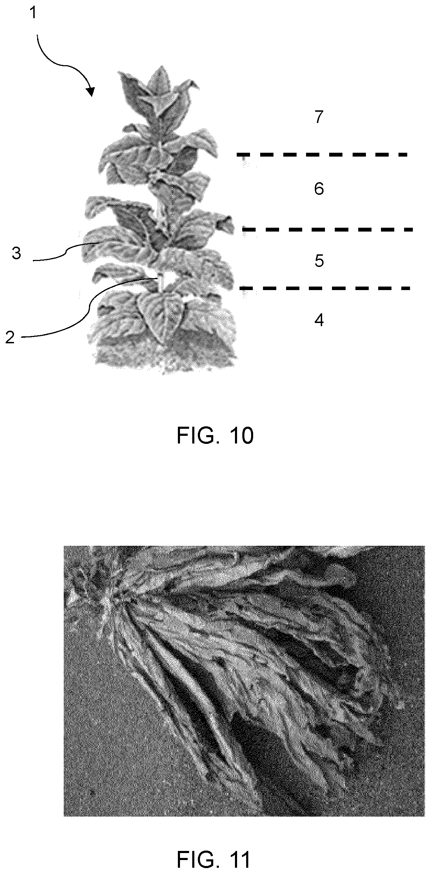

Defoliation refers to the process of stripping or removing leaves from a plant stalk such as tobacco. Figure 10 illustrates a tobacco plant 1.

The leaves of the plant 1 can be assigned to multiple (e.g. four) different categories according to their position on the stalk 2. For example, as shown in Figure 10, according to some schemes, the leaves 3 of a tobacco plant are classed as belonging to one of four different categories: prime 4, cutters 5, bodied leaves 6 and tip leaves 7.

Tobacco leaves are often removed manually from the stalk (stem) of the plant, so as to allow different classes of leaf to be removed separately. However, this can be expensive and time consuming. Where machines are used, they may still be complex and expensive.

### Summary

In one aspect the present disclosure provides an apparatus for processing plant material to remove leaves from a plant stalk, the apparatus comprising:
a plurality of rollers, the plurality of rollers comprising at least one pair of counter-rotating rollers configured to pull leaves away from a plant stalk as it moves relative to the plurality of rollers; and
a guide for guiding movement of plant material relative to the plurality of rollers.

In embodiments, said plurality of rollers (the at least one pair of counter-rotating rollers) are configured to support plant material on top of said rollers.

In embodiments, said plurality of rollers (the at least one pair of counter-rotating rollers) have their axes aligned substantially parallel to one another, in embodiments substantially horizontally.

In embodiments, the plurality of rollers (the at least one pair of counter-rotating rollers) are configured (sized) to allow multiple plants to be simultaneously positioned along the length of the rollers.

In embodiments, the apparatus is configured so that plant material passes between the guide and the plurality of rollers.

In embodiments, the guide is provided (vertically) above the plurality of rollers.

In embodiments, the guide is powered to move so as to bias movement of plant material relative to the plurality of rollers.

In embodiments, the guide is configured to guide plants in an (intended) direction of movement relative to the plurality of rollers and/or with an (intended) orientation of plant stalks.

In embodiments, the guide is powered so that at least part of the guide, where it faces (contacts) plant material moves in the (intended) direction of movement of plant material relative to the plurality of rollers.

In embodiments, the guide comprises any of: one or more rollers; one or more conveyor belts; one or more chain conveyors.

In embodiments, the guide comprises one or more resiliently deformable portions for contacting the plant material.

In embodiments the one or more resiliently deformable portions are formed at least partially of rubber.

In embodiments, the guide comprises a static guide, which is not movable (not powered to move).

In embodiments, the plurality of rollers comprises plural pairs of counter rotating rollers.

In embodiments, a roller (in embodiments only a single roller) of the pair of counter-rotating rollers has an outer surface comprising a raised and/or recessed element to assist with gripping plant leaves.

In embodiments, the raised and/or recessed element extends in both the axial direction and the circumferential direction of the roller.

In embodiments, the raised and/or recessed member extends helically along at least part of the roller.

In embodiments, either or both rollers of the pair of counter-rotating rollers are powered to rotate.

In embodiments, the pair of counter-rotating rollers are formed, at least partially, of metal. In embodiments, the raised and/or recessed element is formed of metal.

In embodiments, the plurality of rollers are arranged such that in use the counter-rotating rollers pull leaves beneath the plurality of rollers.

In embodiments, the apparatus is configured to power (operate) the at least one pair of counter rotating rollers continuously whilst successive plants are provided to the plurality of rollers.

In embodiments, the apparatus comprises one or more of: a leaf collection means (in embodiments comprising a conveyor) for collecting leaves removed from plant stalks by the at least one pair of counter rotating rollers; and a stalk collection means (in embodiments comprising a conveyor) for collecting stalks which have moved past the plurality of rollers.

In embodiments, the apparatus is configured to permit the plurality of rollers to receive plant stalks oriented in a direction extending across the plurality of rollers.

In embodiments, the apparatus comprises an infeed for providing plants to the plurality of rollers in an intended direction and/or orientation.

In embodiments, the apparatus comprises an infeed to the plurality of rollers, the infeed arranged at a first longitudinal end of the plurality of rollers, so that in use plant material is moved along a length of the rollers from the first longitudinal end to a second longitudinal end of the rollers.

In embodiments, the apparatus comprises an infeed to the plurality of rollers, the infeed arranged upstream of a first roller of the plurality of rollers, so that in use plant material is moved across the rollers of the plurality of rollers in turn, from the first roller to a last roller of the plurality of rollers.

In embodiments, the apparatus comprises a cutter for cutting a top off of a plant stalk before the plant stalk is provided to the plurality of rollers.

In embodiments, the cutter comprises one or more cutting blades, in embodiments at least a pair of disk blades.

In embodiments, the apparatus comprises a collection means (in embodiments comprising a conveyor) for collecting the tops of stalks which have been cut off the by cutter.

In one aspect the present disclosure provides an apparatus for processing plant material to remove leaves from a plant stalk, the apparatus comprising a plurality of rollers, the plurality of rollers comprising at least one pair of counter-rotating rollers configured to pull leaves away from a plant stalk as it moves relative to the plurality of rollers.

In one aspect the present disclosure provides a method of processing plant material to remove leaves from a plant stalk, the method comprising providing plant material to an apparatus according to any of the embodiments disclosed herein.

In embodiments, the method comprises continuously operating the apparatus whilst supplying successive plants to the apparatus.

In embodiments, the method comprises providing plant material on top of the plurality of rollers, so that the plant material is supported on the plurality or rollers.

In embodiments, the method comprises cutting a top off a plant stalk before providing the plant material to the plurality of rollers.

In embodiments, the method comprises collecting the tops of plants which have been cut off.

In embodiments, the method comprises providing plant material to plurality of rollers with plant stalks oriented across (perpendicular to the axes of) the plurality of rollers.

In embodiments, the method comprises providing plant material to a first longitudinal end of the rollers of the plurality of counter rotating rollers, and operating the apparatus to move plant material along a length of the rollers from the first longitudinal end to a second longitudinal end of the rollers.

In embodiments, the method comprises providing plant material to a first roller of the plurality of rollers, and operating the apparatus to move plant material the rollers of the plurality of rollers in turn, from the first roller to a last rollers of the plurality of rollers.

In embodiments, the method comprises collecting leaves which have been removed by the at least one pair of counter-rotating rollers.

In embodiments, the method comprises collecting defoliated plant stalks which have moved across the plurality of rollers.

### Brief Description of the Drawings

Fig. 1 shows a plurality of rollers comprising pairs of counter-rotating rollers, which may be used for removing leaves from plant material in embodiments of the presently disclosed apparatus;
Fig. 2 shows pairs of counter-rotating rollers in combination with a guide for guiding plant material, the guide comprising powered rollers positioned opposite the counter-rotating rollers, as may be used in embodiments of the presently disclosed apparatus;
Fig. 3 shows pairs of counter-rotating rollers in combination with a guide forming plural pathways through which plant stalks can pass, as may be used in embodiments of the presently disclosed apparatus;
Fig. 4 shows an embodiment of the presently disclosed apparatus, comprising pairs of counter-rotating rollers, a guide comprising a chain conveyor, and a cutting station;
Fig. 5 is a top view of the apparatus of Fig. 4;
Fig. 6 illustrates a guide comprising a chain conveyor with resiliently deformably paddles which may be used with the apparatus of Fig. 4;
Fig. 7 illustrates a cutter which may be used with the apparatus of Fig. 4;
Fig. 8 is a flowchart showing a method of operating an apparatus in accordance with embodiments of the of the present disclosure;
Fig. 9 is a flowchart showing additional method steps when operating an apparatus in accordance embodiments of the of the present disclosure;
Fig. 10 shows a tobacco plant which may be processed using the apparatus of the present disclosure; and
Fig. 11 shows leaves of a tobacco plant once removed from the stalk.

Like reference numerals are used for like features throughout the drawings, where appropriate.

It will be appreciated that the Figures, whilst illustrating various aspects and features of the present disclosure, are not exhaustive and/or exclusive, and the apparatus and methods disclosed herein are not limited to the exact form shown. It will be appreciated that features of the embodiments described herein (and for example shown in the figures) may be combined.

### Detailed description

Aspects and features of certain examples and embodiments are described herein.

The present disclosure relates to processing plant material (e.g. tobacco), to remove leaves from the plant stalk, and with providing apparatus (and method) that is effective, and relatively simple and inexpensive.

The apparatus of the present disclosure comprises a plurality of rollers 10 comprising at least one pair of counter-rotating rollers 11 configured to pull leaves away from plant stalks as plant material moves relative to the plurality of rollers, and a guide 30 (guide means) for guiding (configured to guide) movement of plant material relative to the plurality of rollers 10.

In this regard, the guide 30 may assist with guiding plant material in an intended direction and/or orientation relative to the plurality of rollers 10, so as to assist with reliably performing defoliation.

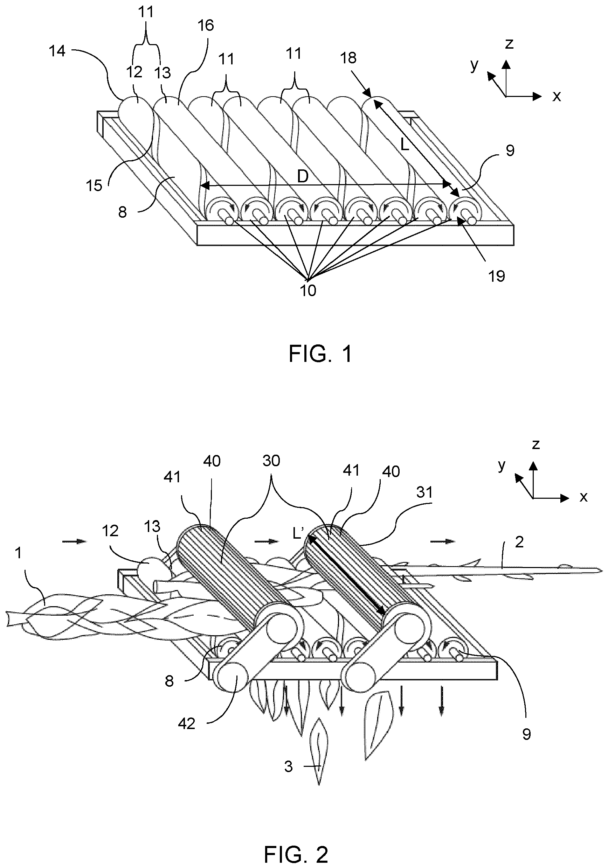

By way of illustration, but not limitation, Figs. 1 to 6 show various embodiments for rollers 10, 11 and guide(s) 30.

From a general aspect, the plurality of rollers 10 (and one or more pairs of counter-rotating rollers 11) are configured to contact plant material 1 as plant material moves (is transported) relative to the plurality of rollers 10 (and counter-rotating rollers 11). In this way, the one or more pairs of counter-rotating roller 11 act to remove leaves 3 whilst plant material 1 moves relative to the plurality of rollers 10.

Such configurations can allow plant material to be continuously fed to the apparatus for processing, so that it is not necessary to halt the rotation of the rollers 10, 11, or otherwise halt the apparatus, between successive plants to be processed.

Thus, in embodiments, the apparatus is configured to be operated (operable) continuously whilst successive plants are provided to the apparatus (without halting the apparatus, for example without halting the rotation of the rollers 10, 11, between processing successive plants).

Due to leaves being removed as the plant material 1 is moved (transported) relative to the plurality of rollers 10, 11, all leaves (all types of leaf) 3 on a plant stalk 2 may be removed during transport, in embodiments without in separation into different leaf types (e.g. prime 4, cutters 5, bodied leaves 6 and tip leaves 7). In this regard, the Applicant has recognised there may be situations where no separation of leaves into different types is needed (e.g. for certain plant types, e.g. certain tobacco plant types), and that the apparatuses of the present disclosure may provide an efficient way of removing leaves in such situations.

Alternatively, when it is desired to separate leaves according to different leaf types, this may be done by (the method of using the apparatus may comprise) collecting the leaves that are removed by the apparatus, and sorting the leaves (e.g. manually sorting the leaves).

The plurality of rollers 10 (and counter-rotating rollers 11) are in embodiments arranged sequentially (and for example substantially adjacent one another), from a first roller 8 to a last roller 9 in the sequence. Each roller 10, 11 has a respective length L extending along its axis from a first longitudinal end 18 to a second longitudinal end 19 of the roller 10, 11.

In embodiments, the apparatus is configured (operable) to move plant material 1 (to allow plant material to be moved) in a direction substantially perpendicular to the axes of (one or more, or all of) the rollers 10, 11. Thus, the apparatus may be configured (operable) to move plant material 1 in a direction across successive rollers 10, 11, from the first roller 8 to the last roller 9 in the sequence. In other words, plant material 1 may be receivable by (provided to) the first roller 8, and in embodiments defoliated plant stalks 2 collectable (collected) from the last roller 9 in the sequence. This is illustrated for example in Fig. 2.

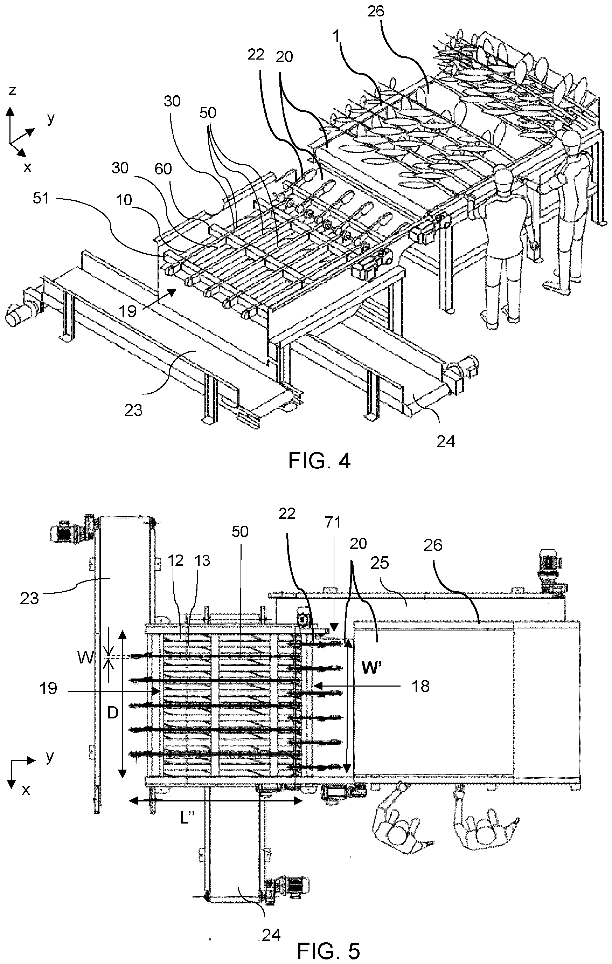

In embodiments, the apparatus is alternatively or additionally configured (operable) to move plant material 1 (to allow plant material to be moved) in a direction substantially along the length L (along the axes) of the rollers 10, 11. In such embodiments, plant material may be receivable by (provided to) the first longitudinal end 18 of the rollers 10, 11, and in embodiments defoliated plant stalks 2 collectable (collected) from the second longitudinal end 19 of the rollers 10, 11. This is the case for the apparatus shown in Fig. 4 for example.

In embodiments, the apparatus is configured (operable) to move plant material 1 (to allow plant material to be moved) with plant stalk(s) 2 oriented across (spanning one or more) successive rollers of the plurality of rollers 10. In other words, apparatus may be configured (operable) to move (transport) plant material with plant stalk(s) oriented substantially perpendicular to the axes of rollers 10, 11. This may provide effective removal of leaves from plant stalks. Example such configurations are shown in Figs. 2 and 4 for example.

In embodiments, the apparatus comprises an infeed 20 for providing plant material 1 to the plurality of rollers 10 from the intended direction and/or in the intended orientation.

Thus, in embodiments, the infeed 20 is configured (sized and/or positioned) to allow plants material 1 to be provided to the plurality of rollers 10 with plant stalks 2 oriented across the rollers 10 (perpendicular to the axes of the rollers 10).

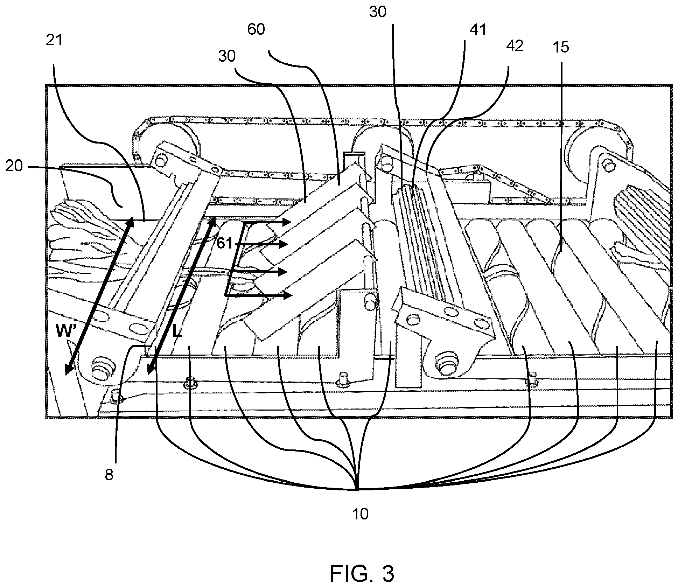

In embodiments, the apparatus comprises an infeed 20 upstream of (adjacent) the first roller 8, for providing plant material 1 to the first roller 8 (so that plant material 1 can then be transported in a direction across successive rollers 10, 11, from the first roller 8 to the last roller 9 in the sequence). This is illustrated in Fig. 3 for example.

In such embodiments, the infeed 20 may be configured (sized and positioned) to allow plant material to be provided with stalks 2 oriented towards (across) the plurality of rollers 10. In such embodiments, the infeed 20 may be configured (sized and positioned) to allow plant material to be provided at plural (in embodiments at any) positions along the length L of the first roller 8. For example, the infeed 20 may have a width W' corresponding to the length L of the first roller 8. In other words, the infeed 20 may be configured (sized and positioned) to allow plural plants to be provided simultaneously to the first roller 8 (to be provided simultaneously to the plurality of rollers 10, and thus provided simultaneously to the pair(s) of counter-rotating rollers 11 for defoliation).

In embodiments, the apparatus additionally or alternatively comprises an infeed 20 upstream of (adjacent) the first longitudinal end 18 of the rollers 10, 11 (so that so that plant material 1 can then be transported in a direction substantially along the length L of the rollers 10, 11). This is illustrated in Figs. 4 and 5 for example.

In such embodiments, the infeed 20 may be configured (sized and positioned) to allow plant material to be provided with stalks 2 oriented across the plurality of rollers 10 (perpendicular to the axes of the rollers 10, 11). In such embodiments, the infeed 20 may have a width W' spanning the plurality of rollers 10. In such embodiments, the infeed may have a depth (in a direction away from the first longitudinal ends 18 of the rollers 10, 11) allowing plural plants to be queued for provision to the plurality of rollers 10. This may allow successive plants to be provided to the rollers 10, 11 in relatively quick succession.

The infeed 20 (regardless of the location at which it is provided) may be any suitable and desired type of infeed, and may be static (not moving) or moveable (powered to move). Example types of static infeed include, for example, a table or chute 21 (for example as shown in Fig. 3), however other configurations of static infeed could be used. Example types of moveable infeed comprise, for example, conveyors (for example conveyor belt(s) 26 (for example as part of a supply table), or chain conveyor(s) 22, for example as shown in Fig. 4) or powered rollers, however other configurations of movable infeed could be used.

In embodiments, the apparatus comprises a collection means (collector) 23 for collecting (defoliated) plant stalks 2 that have been moved (transported) past the rollers 10, 11.

In embodiments where plant material is (intended to be) moved in a direction across along the axes of the rollers 10, 11, from a first longitudinal end 18 to a second longitudinal end 19 of the rollers 10, 11, the stalk collection means 23 may be positioned after (downstream of) (adjacent) the second longitudinal end 19 of the rollers 10, 11 (for example as illustrated in Fig. 4).

In embodiments where plant material is (intended to be) moved in a direction across (perpendicular to axes of) the plurality of rollers 10, from a first roller 8 to a last roller 9 in the sequence (as illustrated in Fig. 2 for example), a stalk collection means 23 may be positioned after (downstream of) (adjacent) the last roller 9.

The stalk collection means 23 (regardless of the location at which it is provided) may be any suitable and desired type of collection means, such as for example a bin, chute, conveyor or other stalk collecting means. In embodiments, the stalk collection means comprises a powered conveyor (for example as illustrated in Fig. 4), configured to convey (transport) plant stalks away from the rollers 10, 11.

In embodiments, the apparatus is configured to move (transport) plant material 1 relative to (past) the plurality of rollers 10 (and counter-rotating rollers 11) on one side (in embodiments only a single side) of the plurality of rollers 10 (and counter-rotating rollers 11). This is the shown in Figs. 2 and 4 for example.

In this regard, an infeed 20 may be configured to provide plant material 1 to a single side of the plurality of rollers 10.

In embodiments, the apparatus is configured to (operable to) move (transport) plant material so that plant stalks do not hang between the rollers 10, 11.

In embodiments, the plurality of rollers 10 are positioned so that a gap between rollers (between the (cylindrical) outer surfaces 14, 16 of rollers of the plurality of rollers 10, ignoring any raised elements 15 thereon, which will be described in more detail below) is less than the length of a (tobacco) plant stalk.

In embodiments, a gap between the (cylindrical) outer surface 14 of rollers of the plurality of rollers 10 (ignoring any raised elements 15 thereon, which will be described in more detail below) is at most 10 cm, or at most 5 cm, or at most 2 cm.

In embodiments, the plurality of rollers 10 are positioned substantially adjacent one another, for example so that a gap between rollers (between the (cylindrical) outer surface 14 of rollers of the plurality of rollers 10, ignoring any raised elements 15 thereon, which will be described in more detail below) is less than a dimension (diameter) of a (each) the roller 10.

Such configurations may help to provide essentially continuous contact with the plant material as it is transported. This may also help to prevent plant stalks from inadvertently moving (falling) between the rollers 10, 11 (in embodiments even if the plant stalks inadvertently rotate away from an intended orientation perpendicular to the axes of the rollers 10, 11, and inadvertently become aligned with the axes of the rollers 10, 11).

In embodiments, the rollers 10, 11 are substantially parallel to one another (have their respective axes oriented in the same direction as one another). This may assist with evenly transporting plant material 1 relative to the rollers.

In embodiments, the rollers 10, 11 each have substantially the same diameter as one another. In embodiments, in use, the rollers 10, 11 move (are powered, or otherwise caused to move for example as a result of contact with an adjacent roller or contact with moving plant material) so that a (cylindrical) outer surface 14 of each (all) of the rollers 10, 11 which contacts plant material moves at substantially a same speed. Again, this may assist with evenly transporting plant material relative to the rollers.

In embodiments, the plurality of rollers 10, 11 are configured to at least partially support plant material as it is transported, for example to support plant material placed on top of the rollers 10, 11 (for example as illustrated in the Figures).

In this regard, in embodiments one or more (or all) the rollers 10, 11 have their axis aligned substantially horizontally (for example along a horizontal, y, direction, for example as illustrated in at least Fig. 1). In other words, the length L of the rollers 10, 11 may extend substantially horizontally. In such embodiments, the plurality of rollers 10 may form a bed of rollers. This can allow plant material to be securely supported thereon. Furthermore, in such embodiments, the counter-rotating rollers 11 pull plant leaves downwards, beneath the plurality of rollers 10 (as illustrated in Fig. 3 for example), and leaves 3 can then be collected from beneath the rollers.

However, it would alternatively be possible for one or more (or all) of the rollers 10, 11 to have their axis at a (non-zero) angle relative to the horizontal direction (so that the rollers 10, 11 are angled relative to the horizontal direction). It is noted that, even when angled relative to the horizontal direction, the rollers 10, 11 may provide at least some support to plant material placed on top of them, and the action of the pair(s) of counter-rotating rollers 11 of pulling leaves away from the plant material (and beneath the plurality of rollers 10) still occurs.

Thus, in embodiments one or more (or all) of the rollers 10, 11 have their axis angled up to 90 degrees from the horizontal direction, in embodiments up to but not including 90 degrees, in embodiments up to 45 degrees from the horizontal direction, in embodiments up to 20 degrees from the horizontal direction.

In embodiments, the apparatus is configured so that plants move (are transported) substantially horizontally (when moving relative to the rollers 10, 11). In such embodiments, the rollers 10, 11 (the axes of respective rollers 10, 11, and/or the outer surface of respective rollers 10, 11 which contacts plant material) may each be adjacent one another in the horizontal (x) direction, and may each be at substantially the same height (in a vertical, z, direction). This may be a relatively low-cost arrangement, and is shown in each of the present Figures.

Alternatively, it would be possible to configure the apparatus so that plant material is moved along an incline and/or decline (along an inclined and/or declined path) when moving relative to the rollers 10, 11.

For example, in embodiments where plant material is moved in a direction across successive rollers 10, 11 (so that plants are moved perpendicular to the axes of the rollers 10, 11, for example as illustrated in Fig. 2), an inclined and/or declined path for movement of plant material could be provided by having successive rollers 10, 11 positioned (with their axes and/or outer surface 14) at increasing and/or decreasing heights (in a vertical, z, direction).

As another example, in embodiments where plant material is moved in a direction along the length L (along the axes) of the rollers 10, 11 (as is the case for the apparatus of Fig. 5 for examples), an inclined and/or declined path for movement of plant material could be provided by orienting the rollers 10, 11 so that their axes are angled (tilted upwards or downwards) relative to the horizontal (y) direction.

In embodiments, the apparatus is configured to allow multiple plants 1 to be processed simultaneously. Thus, in embodiments the rollers 10, 11 are configured (sized) to contact (support) more than one plant simultaneously along their length L, for example to contact (support) multiple plants adjacent one another along their length L.

This is illustrated, for example, in Fig. 2 which shows plants plural plants provided (and supported) adjacent one another along the length of the rollers 10, 11 whilst being moved in a direction across successive rollers 10, 11. It will equally be appreciated that in embodiments where plants are moved in a direction along the length (along the axes) of the rollers 10, 11 (for example as is the case for the apparatus of Fig. 5), plural plants can contact (be supported) on the rollers 10, 11 simultaneously.

Thus, in embodiments, one or more (or all) rollers 10, 11 have a length of at least 20 cm, or at least 30 cm, or at least 50 cm.

Additionally, in embodiments where plants are moved in a direction along the length (along the axes) of the rollers 10, 11 (for example as is the case for the apparatus of Fig. 5), rollers having a length of at least 20 cm, or at least 30 cm, or at least 50 cm may help to provide sufficient opportunity for pulling and removing leaves as plants move along the length of the rollers.

Accordingly, in embodiments the apparatus is configured so that multiple plants can be processed (defoliated) simultaneously, in embodiments being configured to permit multiple plants to simultaneously contact (be supported on) the plurality of rollers 10 (along the length, L, of the rollers).

In embodiments, the apparatus is configured to process (defoliate) (support on the plurality of rollers 10) two, three, four, or more plants simultaneously.

The plurality of rollers 10 may comprise any suitable and desired number of rollers 10, 11, for example to provide sufficient contact with (and support of) the plant material as it is transported. Whilst Figs. 1 to 3 shows eight rollers, fewer or more rollers could be used if desired. For example, the apparatus may comprise at least two, three, four, five, or more rollers 10.

In embodiments, the plurality of rollers 10 are configured (sized and positioned) to support a (tobacco) plant stalk along substantially its entire length. Thus, in embodiments the plurality of rollers 10 (from the first roller 8, to the last roller 9) span a distance D of at least 20 cm, or at least 30 cm or at least 40 cm, or at least 1 meter.

One or more (or all) of the rollers 10, 11 may be powered to rotate. The powered rollers may be powered to rotate in any suitable and desired way, for example by a motor or other drive means. One or more of the rollers 10, 11 may share a drive means, for example so that those rollers are driven at a same speed as one another. One example of a possible drive means is a chain drive, which powers one or more rollers together for example at the same speed. Other drive means could alternatively be used, such as a motor (e.g. servomotor) for example powering respective rollers.

In embodiments where plant material is moved in a direction across successive rollers 10, 11 (so that plants are moved perpendicular to the axes of the rollers 10, 11, for example as illustrated in Fig. 2), one or more (at least some) of the rollers may be powered to rotate so that their outer surface, where it contacts plant material, is moved in a direction in which plant material is intended to be transported (i.e. moving in a direction away from the first roller 8, to which the plant material is introduced, towards the last roller 9).

As will be discussed in more detail below, since at least some of the rollers 10, comprise counter-rotating rollers 11, one or more of the rollers 10 may rotate in a first direction, and one or more (different rollers) of the rollers 10 may rotate in a second (different, opposite) direction.

In embodiments at least some of the rollers which are powered to rotate (for example in a same direction as one another) share a drive system and/or a control system to help ensure synchronisation between the rollers. By way of example, Figs. 4 to 6 show a drive means comprising a drive chain which powers plural rollers.

In embodiments, one or more (or all) of the rollers 10, 11 are formed at least partially of metal. In embodiments the outer surface of one or more (or all) of the rollers 10, 11 (which contact plant material) is formed of metal. This may impart durability. Alternatively, any other suitable and desired material could be used, for example a ceramic material, or a resilient material which returns substantially to its original shape after being deformed (e.g. such as rubber).

The rollers of the plurality of rollers 10 could have a smooth surface, or a textured surface. For example, one or more rollers may have a smooth surface, and one or more rollers may have a textured surface. A textured surface in this regard may assist with gripping plant material, and for example, biasing plant material in an intended direction of motion.

As noted above, the plurality of rollers 10 comprises one or more pairs of counter-rotating rollers 11, the counter-rotating rollers acting to pull leaves away from plant material as the plant material is moved relative to the plurality of rollers 10. This action of removing leaves is illustrated, for example, in Fig. 2.

Each pair of counter-rotating rollers 11 comprises a first roller 12 and a second roller 13 which are adjacent one another (with no other rollers 10 in between). The first and second rollers 12, 13, rotate in opposite directions (for example as shown by the directional arrows in Fig. 1) and together act to pull leaves away from the plant stalks (for example, as illustrated in Fig. 3).

In embodiments (for example consistent with the above discussion), the rollers 11 of a (each) pair of counter-rotating rollers 11, have their axes aligned substantially parallel to one another. This may assist with providing a consistent pulling forces on plant leaves regardless of where a plant is positioned along the counter-rotating rollers 11.

In embodiments (for example consistent with the above discussion), a (each) pair of counter-rotating rollers 11 may at least partially support plant material moving above (positioned on top) of the counter-rotating rollers, in which case the counter-rotating rollers 11 act to pull plant leaves downwards and beneath the plurality of rollers 10. In such embodiments, the a (each) pair of counter-rotating rollers 11 may have their axis aligned substantially horizontally (along a y direction).

In embodiments (for example consistent with the above discussion), a (each) pair of counter-rotating rollers 11 may have a length L of at least 20 cm, or at least 30 cm, or at least 50 cm. This may assist with processing multiple plants simultaneously and/or providing sufficient opportunity for pulling and removing leaves in embodiments where plants are moved along the length of the rollers.

In embodiments, the plurality of rollers 10 comprises plural pairs of counter-rotating rollers 11. For example, there may be at least two, three, four, five or more pairs of counter-rotating rollers 11.

In embodiments where plant material is moved across successive rollers 10, 11 (as illustrated in Fig. 2 for example) the provision of plural pairs of counter-rotating rollers 11 provides multiple opportunities for removal of leaves. In embodiments where plants move in a direction along the length L of rollers 10, 11 (for example as is the case for the apparatus of Fig. 4), the provision of plural pairs of counter-rotating rollers 11 provides a pulling force at various locations along the plant material as it is transported, and may thus assist with removing all leaves from the plant material.

In embodiments, the plurality of rollers 10 consists of pairs of counter-rotating rollers 11 (for example as shown in Fig. 1). Thus, in embodiments the apparatus comprises a bed of rollers 10 which support and contact the plant material consisting of pairs of counter-rotating rollers 11.

However, it would alternatively be possible for the plurality of rollers 10 to comprise one or more other rollers not forming a pair of counter-rotating rollers 11. Such other rollers could, for example, be positioned between one or more pairs of counter rotating rollers 11, or at the start (as a first roller 8) and/or at the end (as a last roller 9) of the plurality of rollers 10 (for example to form an infeed and/or outfeed roller, in embodiments where plant material is moved across successive rollers 10, 11, as illustrated in Fig. 3 for example).

In a (each) pair of counter-rotating rollers 11, either or both of the counter-rotating rollers 12,13 may be powered to rotate, for example using a motor or other drive means.

In embodiments (only) a single roller of a (each) pair of counter-rotating rollers 11 is powered to rotate (by an appropriate driver), and the other is free to rotate about its axis (in the opposite direction) (but is not actively powered). For example, the other roller may be caused to rotate due to contact with the powered roller, or due to forces transmitted from the powered roller through the plant leaves when plant leaves are pulled between the pair of rollers. Powered a single roller of the (each) counter-rotating pair 11 may help to reduce the cost and complexity of the apparatus, whilst still being surprisingly effective at leaf removal.

In embodiments where plant material is moved in a direction across successive rollers 10, 11 (so that plants are moved perpendicular to the axes of the rollers 10, 11, for example as illustrated in Fig. 2), the counter-rotating rollers may be configured so that a first (upstream) roller 13 of the pair is powered to rotate, whereas the second (downstream) roller 14 of the pair is not powered to rotate. In such embodiments, the first (upstream) roller 13 of the pair may rotate so that its outer surface, where it contacts plant material, moves in a direction in which plant material is intended to be transported (i.e. moving in a direction away from the first roller 8 to which the plant material is introduced, towards a last roller 9). This may assist with urging plant material in the correct direction.

In embodiments, a (each) pair of counter-rotating rollers 11 provides a traction/friction force which pulls the leaves between the pair of counter-rotating rollers 11, and away from the stalk of plant material which is being transported by the apparatus.

In this regard, each roller of the pair 11 rotates such that the portion of the roller surface facing (closest to) the other roller moves away from the plant material (e.g. in a downwards direction).

In other words, a (each) pair of counter-rotating rollers 11 forms a traction region (where the rollers face one another), which pulls leaves away from the plant material. It will be appreciated that if the force applied by the rollers is greater than the force attaching the leaves to the stem (stalk), the leaves will be separated from the stalk. In embodiments, the rollers are configured to pull (but not cut) the leaves from the stalk.

In embodiments, the surface of either or both of the rollers 12, 13 of a (each) counter-rotating pair 11 is substantially cylindrical, but is textured to enhance grip strength (to enhance the traction force imparted by the pair of rollers).

In embodiments, the outer surface 14, 16 of either or both rollers 12, 13 of a (each) counter-rotating pair 11 has a texture imparted by one or more raised elements and/or one or more recessed elements 15, which assist with gripping plant leaves.

The surfaces of the two rollers 12, 13 of a counter-rotating pair 11 may be different from one another, or may have the same texturing.

In embodiments only one roller of each counter-rotating pair 11 has a textured outer surface (has raised and/or recessed elements 15), whereas the other roller of the pair 11 has a substantially smooth outer surface. This may reduce a cost of the apparatus. The combination of a textured roller (with raised and/or recessed elements 15) and a smooth roller may also provide a good gripping force without cutting leaves.

In embodiments, in a (each) counter-rotating pair, the roller which is textured (provided with raised and/or recessed elements 15) is powered to rotate, whereas the other roller may not be powered to rotate (may rotate freely). Such a configuration may assist with gripping and pulling leaves between the pair of rollers.

In embodiments where plant material is moved in a direction across successive rollers 10, 11 (so that plants are moved perpendicular to the axes of the rollers 10, 11, for example as illustrated in Fig. 3), (only) a first (upstream) (e.g. powered) roller 12 of the pair may be provided with the raised and/or recessed element(s) 15, for example as shown in Figs. 1 to 3. This may assist both with urging plant material across successive rollers, and with gripping and pulling leaves between the pair of rollers. In such embodiments, the second (downstream) (e.g. freely rotating) roller 13 of the pair may have an outer surface which is substantially free from raised and/or recessed element(s) (is substantially smooth).

In embodiments for a (each) roller having raised and/or recessed elements 15, the raised and/or recessed element(s) 15 (individually or together) extend in both the axial direction and the circumferential direction of the roller. In this way, the contact point between plant material and the raised and/or recessed element(s) moves both axially and circumferentially as the roller is rotated, resulting in an angular pulling force on the plant material which can help to pull the leaves off of the stem.

In embodiments, the raised and/or recessed element(s) 15 individually or together span at least 20% of the length of the roller L measured along the axial direction of the roller, in embodiments at least 50%, or at least 70%, or at least 90%, or the entire length of the roller (as is the case for example, for the raised elements 15 in the embodiment shown in the Figures). In embodiments, the raised and/or recessed element(s) individually or together span at least 20%, of the circumference of the roller, in embodiments at least 50%, or at least 70%, or at least 90%, in embodiments encircling the roller one or more times (for example as shown in the Figures).

In embodiments, each raised and/or recessed element 15 is elongate (having a length which is greater than its width). In embodiments, each raised and/or recessed element 15 extends helically along at least part of the roller, in embodiments along the entire (axial) length L of the roller (for example as shown in the Figures).

In embodiments, the raised and/or recessed element(s) (individually or together) (e.g. the helical raised element(s)) encircle the roller at least one, or at least two, or at least three times (e.g. the helical raised elements individually or together have at least one, or at least two or at least three turns). In embodiments, the raised and/or recessed element(s) (individually or together) (e.g. the helical raised element(s)) encircle the roller less than twenty, or less than ten times.

In embodiments, each raised and/or recessed element 15 has a height and/or depth (measured in a direction radially outwards and/or inwards from the (cylindrical) outer surface of the roller) which is at least 1 mm, or at least 5 mm, or at least 10 mm. In embodiments, each raised and/or recessed element 15 has a height and/or depth (measured in a direction radially outwards or inwards from the (cylindrical) outer surface of the roller) which is less than 10 cm, or less than 5 cm, or less than 3 cm.

In embodiments, each raised and/or recessed element 15 has a height and/or depth (measured in a direction radially outwards and/or inwards from the (cylindrical) outer surface of the roller) which is less than 5% of the length L the roller from and/or into which it extends.

In embodiments, each raised and/or recessed element 15 has a width (measured in the circumferential direction of the roller) which is at least 2 mm, or at least 5 mm, or at least 8 mm. In embodiments, the width of each raised or recessed element 15 (measured in the circumferential direction of the roller) is less than 5 cm, or less than 3 cm, or less than 1 cm.

The surfaces of the two rollers 12, 13 of a counter-rotating pair 11 may be formed of a same or different material.

In embodiments either or both (in embodiments both) rollers of (each) counter-rotating pair 11 are constructed (at least partially, in embodiments substantially entirely) of metal. In embodiments, (at least) the (cylindrical) outer surface 14, 16 of either or both (in embodiments both) rollers of the counter-rotating pair 11 is formed of metal. This may provide good durability.

Alternatively, it would be possible to form the outer surface of the rollers 12, 13 of other materials, for example such as ceramic material, polymer, or resilient material (e.g. such as rubber).

In embodiments, one or more (or all) of the raised elements 15 are formed of a same material as (the rest of) the outer surface 14 of the rollers, for example also being formed of metal. However, it would equally be possible to form the raised elements 15 of a different material to the rest of the surface of the roller. For example, the raised elements 15 could be formed of any of: a metal, a ceramic, or a polymer material.

In embodiments, a (each) counter-rotating roller pair 11 is configured so that the rollers 12, 13 contact one another as they rotate. This may assist with providing sufficient pulling force on the leaves of plant material.

Thus, in embodiments where a single roller of a (each) pair 11 comprises one or more raised elements 15, the counter-rotating pair 11 may be configured so that the raised elements 15 contact the (e.g. smooth) outer surface of the other roller of the pair.

Alternatively, it would be possible to configure the rollers of a (each) counter-rotating pair so that they do not contact one another. For example, sufficient pulling force on leaves may still be obtainable using a gap between the rollers (including any raised and/or recessed portions), for example of less than 5 cm, or less than 3 cm, or less than 1 cm, or less than 0.5 cm.

In embodiments rollers forming different (adjacent) pairs of counter rotating rollers 11 do not contact one another.

In embodiments (consistent with the above discussion regarding gaps between rollers of the plurality of rollers 10), the rollers 12, 13 of a (each) pair of counter-rotating rollers 11 (and the rollers of different, adjacent, counter-rotating pairs 11), may be positioned close enough together to generally deter plant stalks from falling between the rollers. In embodiments, the gap between rollers of a (each) pair of counter-rotating rollers 11 is configured to deter plant stalks from falling between the rollers when plant stalks 2 are oriented in a direction perpendicular to the axes of the rollers 10, 11 (and in embodiments even if the plant stalks inadvertently rotate away from the intended orientation perpendicular to the axes of the rollers 10, 11, and inadvertently become aligned with the axes of the rollers 10, 11). Thus, in embodiments, a gap separating the (cylindrical) outer surfaces 14, 16 of the rollers 12, 13 of a (each) pair 11 (ignoring any raised elements 15 thereon) less than the length of a (tobacco) plant stalk, in embodiments at most 10 cm, or at most 5 cm, or at most 2 cm.

It is noted that tobacco leaves can release a sticky gum. Raised and/or recessed elements consistent with the embodiments shown and described herein may allow for sufficiently little contact with (and sufficiently little crushing) of the tobacco leaves to avoid releasing large amounts of gum that would otherwise dirty the rollers (as compared, for example to rollers with a more finely textured surface).

However, it would nevertheless be possible to enhance the gripping force of the counter-rotating rollers in other ways, for example with other textures on the outer surface of either or both of the rollers, e.g. a series of spikes or studs distributed across the surfaces (e.g. interdigitating spikes), a pattern of ridges and/or troughs, or any other form of roughening or texturing.

In embodiments, the apparatus comprises a collection means (collector) 24 for collecting leaves 3 which have been removed from plant stalks 2 by the counter-rotating rollers pair(s) 11.

In embodiments, the leaf collecting means 24 is positioned beneath the plurality of rollers 10, so as to collect leaves pulled (downwards) beneath the plurality of rollers 10 by the counter-rotating roller pair(s) 11.

As discussed above, the apparatus (counter-rotating rollers 11) may be configured to pull leaves 2 away from plant stalks 3 at various locations or throughout the path (transport) of plant material 1 relative to the rollers 10, 11. In embodiments, the leaf collecting means 24 is configured to collect leaves 3 throughout the entire path of plant material relative to the plurality of rollers 10 (regardless of the location at which the leaf is removed).

Thus, in embodiments, the leaf collecting means 24 spans at least part of (in embodiments substantially the entirety of) the plurality of rollers 10. For example, the leaf collecting means 24 may span at least part of (in embodiments substantially the entirety of) the distance D between the first roller 8 and last roller 9 of the rollers 10, and for example span at least part of (in embodiments substantially the entirety of) the length L of the respective rollers 10.

The leaf collection means 24 may comprise any suitable and desired collection means, for example a bin, chute, conveyor or other leaf collecting means.

In embodiments, the leaf collecting means 24 comprises a (powered) conveyor, configured to move leaves 3 (collected beneath the plurality of rollers 10) away from the plurality of rollers 10.

As noted above, in embodiments, the apparatus may be configured (operated) to remove leaves from plant material whilst plant material is transported in an (intended) direction and/or orientation.

To assist with moving plant material in the intended direction, the apparatus is provided with one or more guides 30 (also referred to herein as "guide means" or "plant guide(s)") for guiding movement of plant material relative to the rollers 10, 11.

The guide(s) 30 are provided in addition to the rollers 10 comprising the one or more pairs of counter-rotating rollers 11.

The guide(s) 30 may assist with guiding (biasing) movement of plant material (in the intended direction of movement) relative to the rollers 10, 11, and/or assist with guiding (maintaining) the (intended) orientation of plant material when moving relative to the rollers 10, 11.

In embodiments, the guide(s) 30 are provided (positioned and/or shaped) to contact plant material as plant material is moved relative to the plurality of rollers 10.

In embodiments the apparatus comprises one or more guides 30 which are movable (in embodiments powered to move) so at least part of the guide 30, where it faces (contacts) the plant material, is movable in the (intended) direction of movement of plant material.

For example, in embodiments comprising one or more guides 30 which are guide rollers 40 (for example as illustrated in Fig. 2), said guide roller(s) 40 may be powered (operable) to rotate so that a (cylindrical) outer surface of the roller 40, where it faces plant material, moves in the (intended) direction of movement of plant material. Similarly, in embodiments comprising one or more guides 30 which are conveyors 50 (e.g. conveyor belt(s), or chain conveyor(s), Fig. 4 for example showing chain conveyors), said conveyor(s) 50 may be powered (operable) to move so that outer surface of the conveyor 50, where it faces plant material, moves in the (intended) direction of movement of plant material.

Thus, in embodiments, the apparatus may be provided with one or more guides (guide means) 30 which are moveable (and in embodiments powered to move), which comprise any combination of: one or more rollers, one or more conveyor belts, one or more chain conveyors, or other movable means.

The guide(s) 30 which are powered to move may assist with biasing movement of plant material relative to the plurality of rollers (in the intended direction of movement of plant material relative to the rollers 10, 11). Such powered guide(s) 30 may accordingly be referred to herein as "biasing means".

As noted above, in embodiments one or more guides 30 are movable (in embodiments powered to move) so at least part of the guide 30, where it faces the plant material, is movable in the (intended) direction of movement of plant material.

As discussed above, the (intended) direction of movement may be substantially perpendicular to the axes of the rollers 10, 11 (for example as shown in Fig. 2), or may be substantially parallel to the axes of the rollers 10, 11 (for example is the case for the apparatus of Fig. 4)

In embodiments where the (intended) direction of movement of plant material 1 is perpendicular to the axes of the rollers 10, 11 (for example as shown in Fig. 2), the one or more guides 30 may accordingly be powered to move so that at least part of the guide 30, where it faces (contacts) plant material, moves in a direction substantially perpendicular to the axes of the rollers 10, 11.

This could be embodied, for example using one or more guides 30 comprising guide rollers 40 powered to rotate. In this case, each guide roller 40 may have an axis substantially aligned with axes of the rollers 10, 11 (for example as shown in Fig. 4), so that that when the guide roller(s) 40 are powered to rotate, their outer surface moves in a direction perpendicular to the axes of the rollers 10, 11.

In such embodiments, the length L' of a (each) guide roller 40 may be substantially the same as the length L of the rollers 10, 11. This may assist with providing a biasing force regardless of the position of plant material on the rollers 10, 11.

However, it would alternatively be possible to provide a reasonable biasing force with the length L' of a (each) guide roller 40 being less than the length L of the rollers 10, 11. Thus, in embodiments, the length L' of a (each) guide roller 40 may be greater than 20%, or greater than 50%, or greater than 80%, or the entire length L of the rollers 10, 11.

It would also be possible to have plural guide rollers 40 with respective lengths L' which together span at least part of the length L or the rollers, for example together spanning greater than 20%, or greater than 50% or greater than 80% of the length L, or the entire length L of the rollers 10, 11. This could equally provide a biasing force regardless of where a plant is oriented along the length L of the rollers 10, 11.

In embodiments, plural guide rollers 40 may be positioned (at different positions) along (for example spaced evenly along) the intended direction of movement of plant material. This may assist with biasing plant material 1 in the intended direction throughout its entire path across the rollers 10, 11.

In embodiments where the (intended) direction of movement of plant material 1 is perpendicular to the axes of the rollers 10, 11 (for example as shown in Fig. 2), it would be possible to alternatively or additionally provide one or more guide(s) 30 comprising conveyors 50 (e.g. conveyor belts or chain conveyors) for biasing the movement of plant material (for example in a similar manner to that shown in Fig. 4, although with a different orientation).

This could be embodied by providing one or more conveyers 50 (e.g. conveyor belt(s) and/or chain conveyor(s)) powered to move so that their outer surface, where it faces plant material, moves in a direction perpendicular to the axes of the rollers 10, 11.

In this regard, each conveyor 50 (or plural conveyors together) may extend (have a length in the direction in which the conveyor moves which extends) along least part of a distance D spanned by the plurality of rollers 10 (corresponding to the distance D between the first roller 8 and last roller 9 of the sequence). In other words, the conveyor(s) may extend in the x direction shown in Fig. 2. This may assist with urging plant material throughout its path across the rollers 10, 11.

Each conveyor 50 (or plural conveyors together) could extend (have a length in the direction in which the conveyor moves) greater than 20%, or greater than 50% or greater than 80% of the distance D spanned by the rollers 10, 11.

To assist with providing a biasing force regardless of where a plant is oriented along the length L of the rollers 10, 11, plural conveyors 50 may be positioned (at different positions) along length L of the rollers 10, 11.

The (each) conveyor 50 may have any suitable and desired width. A chain conveyor may generally have a relatively small width, whereas a conveyor belt may be configured with a relatively large width if desired. In embodiments each conveyor 50 may have a width which spans at least part of the length L or the rollers 10, 11, for example with one or more conveyors individually or together spanning greater 5% or greater than 10%, or greater than 20%, or greater than 50% or greater than 80% of the length L, or the entire length L of the rollers 10, 11.

In embodiments where the (intended) direction of movement of plant material 1 is along the length L of the rollers 10, 11 (for example as is the case in Fig. 4) one or more guides 30 may powered to move so that at least part of the guide 30, where it faces (contacts) plant material, moves in a direction substantially parallel to the axes of the rollers 10, 11.

This could be embodied, by providing one or more conveyers 50 (e.g. conveyor belt(s) and/or chain conveyor(s)) powered to move so that their outer surface, where it faces plant material, moves in a direction substantially parallel to the axes of the rollers 10, 11 (for example as shown in Fig. 4).

In such embodiments, each conveyor 50 may extend (have a length L" in the direction in which the conveyor moves which extends) along least part of the length L of the rollers 10, 11. This may assist with urging plant material throughout its path along the rollers 10, 11.

Alternatively, plural conveyors could be positioned (at different positions) along the intended direction of movement (along the length L of the rollers 10, 11), which together extend (have a combined length L" in the direction in which the conveyors move which extends) along least part of the length L of the rollers 10, 11.

In embodiments a conveyor 50 (or plural conveyors 50 together) could extend (have a length in the direction in which the conveyor moves) greater than 20%, or greater than 50% or greater than 80%, or at least the entirety of the length L of the rollers 10, 11.

To assist with providing a biasing force evenly to plant material, plural conveyors 50 may be positioned (at different positions) relative to the plurality of rollers 10, 11 (at different positions along the distance D spanned by the plurality of rollers 10, 11). The conveyors may, for example, be evenly spaced along the distance D spanned by the plurality of rollers 10, 11. This is illustrated for example in Fig. 4.

The (each) conveyor 50 may have any suitable and desired width, W. A chain conveyor may generally have a relatively small width, whereas a conveyor belt may be configured with a relatively large width if desired. In embodiments, a conveyor 50 (or plural conveyors together) may have a width which spans at least part of the distance D spanned by the rollers 10, 11, for example individually (or together) spanning greater 5% or greater than 10%, or greater than 20%, or greater than 50% or greater than 80%, or the entire distance D spanned by the rollers 10, 11.

In embodiments where the (intended) direction of movement of plant material 1 is along the length L successive rollers 10, 11 (for example as shown in Fig. 4), it would be possible to alternatively or additionally provide one or more guides 30 which are guide rollers 40 (for example in a similar manner to that shown in Fig. 3, albeit with the guide rollers oriented in a different direction).

For example, one or more guide rollers 40 may be provided, each having axis aligned substantially perpendicularly to the axes of the rollers 10, 11 (so that that when the guide roller(s) 40 are rotate, their outer surface moves in a direction perpendicular to the axes of the rollers 10, 11). In other words, each guide roller 40 may have its axis aligned with the x direction shown in Figs. 4 and 5.

In such embodiments, the length L' of a (each) guide roller 40 may be substantially the same as the distance D spanned by the rollers 10, 11. This may assist with providing a biasing force across the entirety of any plant material.

However, it would alternatively be possible to provide a good biasing force with the length L' of a (each) guide roller 40 being less than the distance D spanned by the rollers 10, 11. Thus, in embodiments, the length L' of a (each) guide roller 40 may be greater than 20%, or greater than 50%, or greater than 80%, or the entire distance D spanned by the rollers 10, 11.

It would also be possible to have plural guide rollers 40 with respective lengths L' which together span at least part of the distance D spanned by the rollers 10, 11, for example together spanning greater than 20%, or greater than 50% or greater than 80%, or the entire distance D spanned by the rollers 10, 11. This could equally provide a reasonable biasing force.

In embodiments, plural guide rollers 40 could be positioned (at different positions) along (for example space evenly along) the intended direction of movement of plant material 1 (along the length L of the rollers 10, 11). This may assist with biasing plant material 1 in the intended direction throughout its entire path along the rollers 10, 11.

From a general aspect (for example as apparent from the discussion above), the apparatus may comprise plural guides 30 (guide means), for example positioned along (at different positions) along (for example spaced evenly along) the intended direction of movement of plant material 1.

From a general aspect (for example as apparent from the discussion above), the apparatus may alternatively or additionally comprise plural guides 30 (guide means) at different positions across (for example spaced evenly across) the intended direction (path) of movement of plant material 1.

When the guide(s) 30 comprise one or more powered guide means, said powered guide(s) may be powered to move in any suitable and desired way. For example, guide(s) may be powered by a motor, drive chain, drive shaft or another type of driver.

In embodiments, the apparatus is provided with plural powered guides 30. This may assist with urging plant material 1 along its entire length and/or at multiple positions relative to the plurality of rollers.

In embodiments comprising plural guides 30 which are powered to move, at least some of the guides 30 may share a drive means, for example so that those guides are driven at a same speed (and in a same direction) as one another. For example, in the embodiment shown in Fig. 4 plural guides each comprising a chain conveyor 50 are driven by a shared drive shaft 51.

The shape and/or material of the a (each) powered guide 30 may be configured in any suitable and desired way.

For example, in embodiments where the guide(s) 30 comprise one or more powered rollers 40 (for example as illustrated in Fig. 3), the powered roller(s) 41 could be formed at least partially of a rigid material (for example so that an outer surface of the powered roller(s) 41 is formed of a rigid material), for example a metal, or a ceramic material, or a polymer material. This may provide durability, particularly in the case of metal. However, it would be possible to alternatively form at least part of (for example an outer surface of) one or more powered rollers 41 of a resilient material, for example rubber, which may provide some compliance if (where) it contacts plant material.

In embodiments where the guide(s) 30 comprises powered roller(s) 41, the outer surface of the powered roller(s) 41 could be substantially smooth.

Alternatively, and in embodiments, one or more guides 30 which are powered roller(s) 41 may have a textured outer surface. For example, the outer surface of a (each) powered roller 41 may comprise one or more recessed elements and/or raised elements (the raised elements in embodiments being configured to contact plant material in use, and so form plant contacting portions 31). This may assist with engaging plant material and urging plant material in the machine direction. The raised and/or recessed elements may comprise, for example, ridges and troughs extending along at least part of (or all of) the length L' of an otherwise substantially cylindrical roller (for example as illustrated for example in Fig. 3).

In embodiments where a powered guide 30 comprises a chain conveyor 50, the chain may be formed of any suitable and desired material. In embodiments the chain is formed of metal, which may impart durability. However, other materials could be used.

In embodiments comprising powered guide(s) 30, a (each) powered guide 30 may comprise one or more plant contact portions 31 (plant contacting portions), which extend (outwards) from (a body, or an outer surface of) the powered guide 30 for contacting plant material. This may assist the guide 30 with urging (biasing) plant material in the machine direction.

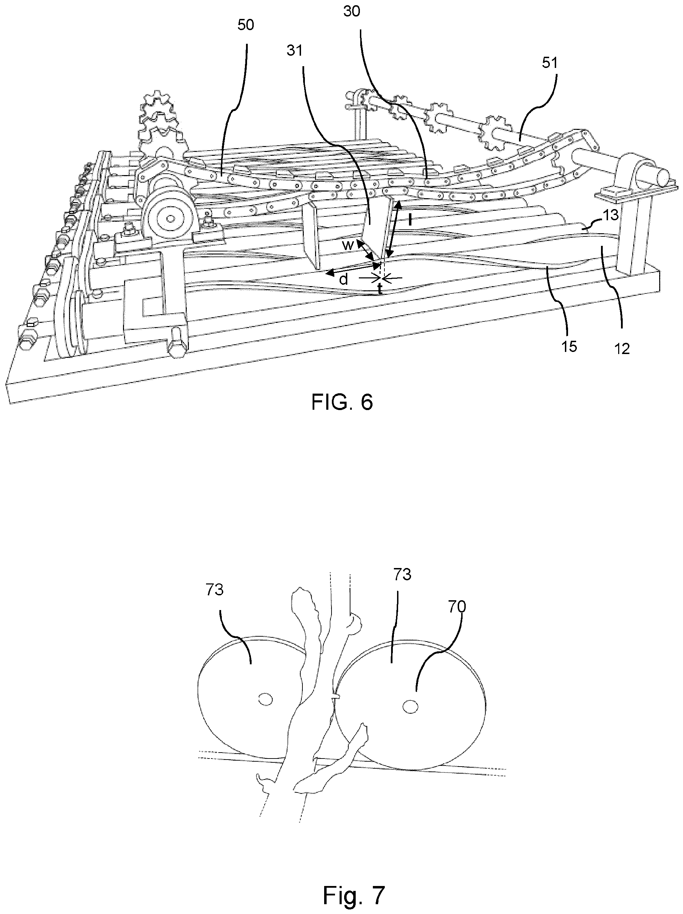

By way of example, Fig. 6 illustrates plant contact portions 31 in an embodiment, provided on (extending from) a guide which is a chain conveyor 51.. As another example, Fig. 2, illustrates plant contact portions 31 in an embodiment provided on (extending from) an outer surface of a guide which is a powered roller 40. It will be appreciated that plant contact portions 31 could be provided on any type of powered guide.

The plant contact portion(s) 31 may be configured to have movement/compliance when contacting plant material. This may help avoid damage to plant material.

For example, the plant contact portion(s) 31 may be formed of at least partially (in embodiments entirely) of a resiliently deformable material, for example rubber. This may assist with gently contacting and urging plant material.

Alternatively, in embodiments the plant contact portion(s) 31 may be formed at least partially (in embodiments entirely) of a rigid material (e.g. a metal, ceramic, or polymer material.

The plant contact portion(s) 31 of a guide 30 may be (mechanically) attached to the guide 30. In such embodiments, the plant contact portion(s) 31 may be attached to the plant guide by a movable/flexible joint/linkage (for example, via a chain, living hinge, or other flexible linkage). This can provide movement/compliance when contacting plant material.

For example, Fig. 6 shows plant contact portions 31 which are formed of rubber, and which are mechanically attached to a guide 30, which is a (metal) chain conveyor 50, by a flexible linkage.

Alternatively, plant contact portion(s) 31 of a guide 30 could be integrally formed with the guide 30. For example, one or more plant contact portion(s) 31 could comprise extensions of the guide 30 itself. For example, plant contact portion(s) 31 may comprise resiliently deformable extension(s) from a resiliently deformable outer surface of a roller 41 or from a resiliently deformable chain conveyor 50, or may comprise for example extension(s) from an outer surface of a rigid (e.g. metal) roller 41 or chain conveyor 50).

In embodiments, only the one or more plant contact portions 31 of a powered guide 30 are formed of a resiliently deformable material (whereas other parts of the guide 30 are formed of a material which is not resiliently deformable). For example, in the context of a chain conveyor 30, the chain may be formed of a metal material, with one or more resiliently deformable plant contact portion(s) 31 attached to the chain. Likewise, in the in the context of a powered roller 41, the roller core may be formed of a metal material, with one or more resiliently deformable plant contact portion(s) 31 forming or extending from an outer surface an outer surface of the powered roller 41.

In embodiments, one or more of (or each) powered guide 30 (e.g. rollers, conveyer belt, chain conveyor) is provided with plural plant contact portions 31, positioned so that when the guide is powered to move, successive plant contact portions 31 move (in the intended direction of movement of plant material) relative to the rollers 10, 11 (and so plant material is contacted and biased by plural successive plant contact portions as the guide moves). For example, plural plant contact portions 31 may be positioned about a powered roller 41, or along the length L" a powered conveyor (chain conveyor 30, or conveyor belt).

A distance, d, between adjacent (successive) plant contact portions 31 may be greater than 1 cm, or greater than 5 cm, or greater than 10 cm, or greater than 20 cm. A distance between adjacent (successive) plant contact portions 31 may be less than 1 metre, or less than 50 cm. (The distance between plant contact portions 31 in the case of a conveyor belt or chain conveyor 50 may be measured along the length of the conveyor, whereas the distance between plant contact portions 31 in the case of a roller 40 may be measured circumferentially about the roller).

In embodiments, the powered guide(s) 30 are configured so that only the one or more plant contact portions 31 contact plant material in use (whereas the rest of the powered guide 30, e.g. a powered roller 41 or conveyor chain 50, does not contact plant material in use).

A (each) plant contact portion 31 may have length, I, (extending outwards from the powered roller 40, or (chain) conveyor 50) of at least 1 cm, or at least 3 cm, or at least 5 cm, or at least 7 cm, or at least 10 cm. This may allow sufficient contact with plant material for biasing movement of plant material.

A (each) plant contact portion 31 may have width, w, (extending perpendicular to the intended direction of movement of plant material) of at least 1 cm, or at least 3 cm, or at least 5 cm, or at least 7 cm, or at least 10 cm. This may allow sufficient contact with plant material for biasing movement of plant material. For example, a (each) plant contact portion 31 may have a width which is at least the width of a plant stalk 2.

A (each) plant contact portion 31 may have thickness, t, (measured in the intended direction of movement of plant material) of less than 3 cm, or less than 2 cm, or less than 1 cm. In the case of resiliently deformable portion 31 for example, this may provide sufficient flexibility when contacting plant material for biasing movement of plant material.

In the example shown in Fig. 6, each plant contact portion 31 comprises a paddle (a substantially planar piece of material), with a substantially rectangular shape. However, other shapes would alternatively be possible.

Regarding the position of the guide(s) 30, in embodiments, one or more guides are configured (positioned) opposite (facing) (e.g. above) the plurality of rollers 10 comprising the one or more pairs of counter-rotating rollers 11. Thus, in embodiments, one or more guides may be configured to contact the opposite side of the plant material compared to the rollers 10, 11.

In such embodiments, one or more guides 30 may be positioned (configured) so that, in use, plant material passes between the rollers 10, 11 and the guide(s). This is illustrated for example in Fig. 2, and is also the case in the apparatus shown in Fig. 4.

Configuring the apparatus so that plant material passes between the rollers 10, 11 and the guide(s) 30 may assist with urging (biasing) plant material towards the rollers 10, 11 for removal of leaves. This urging of plant material towards the rollers 10, 11 may also help with maintaining a desired orientation of plant stalks.

In embodiments, one or more guides 30 which are positioned provided opposite (facing) the plurality of rollers 10 are urged (moveable) towards the rollers 10, 11 (and towards plant material), for example under their own weight and/or by an urging means. The urging means could be any suitable and desired urging means, such as for example a spring mechanism or a hydraulic mechanism.

For example, a guide 30 comprising a chain conveyor 50 (for example illustrated in Fig. 3), the chain may be urged towards the rollers 10, 11 under its own weight. In such embodiments, plant contact portions 31 may hang from the chain conveyor 50 towards the rollers 10, 11 (and towards plant material) (the plant contact portions 31 being attached to the chain by a movable joint, for example).

As another example, a guide 30 comprising a guide roller 40 may be cantilevered, and so urged towards the rollers 10, 11 under its own weight by virtue of a cantilever 42. Alternatively, it would be possible to have one or more guide rollers 40 at a fixed position.

In embodiments, one or more guides 30 which are positioned provided opposite (facing) the rollers 10, 11, may be configured with resiliently deformable portion(s) 31 (for example as described above). In such embodiments, the resiliently deformable portion(s) 31 may be configured with a length, I, which spans at least part of a gap between the guide (e.g. the (otherwise cylindrical outer surface of the) guide roller 40, or (the chain of the) chain conveyor 50) and the rollers 10, 11, for example spanning at least 50% of the gap, or at least 70% of the gap or at least 90% of the gap. In embodiments, the resiliently deformable portions have a length, I, which is longer than the size of the gap between the guide 30 chain conveyor 50 and the rollers 10, 11 (in such embodiments, the resiliently deformable portions 31 can contact plant material over a larger part of the path of plant material, and also are caused to resiliently deform when contacting plant material which may assist with gripping and biasing movement of plant material).

The Figures show guides 30 which are provided facing (above) the rollers 10, 11 and so on the opposite side of plant material as the rollers 10, 11.

However, it would be possible to alternatively or additionally provide (position) one or more guides 30 opposite (facing) (e.g. above) the rollers 10, 11, but at a position which contacts one or more lateral sides of plant material (in other words, being positioned substantially at a same height as (along) the path which plant material is to travel). In such embodiments, plant material may be urged in the intended direction of travel and/or maintained in a desired orientation by virtue of moving adjacent one or more guides 30.

It would be possible to alternatively or additionally provide (position) one or more guides 30 on the same side of the path of plant material 1 as the rollers 10, 11). In such embodiments, plant material may be urged in the intended direction of travel and/or maintained in a desired orientation by virtue of moving over (on top of) one or more guides 30.

Accordingly, one or more guides 30 may be provided beneath the path of the plant material (as it moves relative to the plurality of rollers 10). For example, one or more guides 30 may be provided adjacent (for example substantially horizontally adjacent) one or more rollers 10 (adjacent one or more pairs of counter-rotating rollers 11). For example, one or more guides 30 may be provided between one or more rollers 10 (between one or more counter-rotating pairs 11), and/or outboard of any rollers 10, 11 (for example as an infeed to or outfeed from the rollers 10, 11).

Regardless of position, the guides 30, could be any of the types of guides discussed herein, such as one or more moveable (powered) guide rollers 40, one or more movable (powered) conveyors, or one or more static (non-moving) guides.

Whilst various configurations for movable (powered) guides 30 are described above, the apparatus may additionally or alternatively be configured with or more static guides (which are not configured to move).

Such static guide(s) 30 may have a shape and/or position which assists with orienting (maintaining the intended orientation) of plant material 1.

For example, one or more a static guides 30 may be configured (positioned) opposite (facing) (e.g. above) the plurality of rollers 10 comprising the one or more pairs of counter-rotating rollers 11, so as to contact the opposite side of the plant material compared to the rollers 10, 11, in embodiments so that plant material passes between the rollers 10, 11 and the static guide(s). This is the case, for example for the guide elements 60 shown in Fig. 4 for example. Whilst such static guide(s) 30 do not move, they may still cause plant material to be urged against the rollers 10, 11, and so assist with guiding plant material.

As another example, the apparatus may comprise one or more static guides 30 configured (positioned) opposite (facing) (e.g. above) the rollers 10, 11, said static guide(s) being configured to contact one or more lateral sides of plant material (in other words, being positioned along the path which plant material is to travel) (for example is the case for the static guide shown in Fig. 3).

Static guide(s) may have any suitable and desired shape and/or size for contacting and thus guiding plant material.

In embodiments, (for example as shown in Figs. 3 and 4) a static guide 30 may comprise one or more guide elements 60 (for example pieces of material) which extend in an intended direction of movement of plant material (for example extending across the rollers 10, 11 for example as illustrated in Fig. 3, or extending parallel to the axes of the rollers for example as illustrated in Fig. 4). In embodiments, the guide elements 60 extend for a distance in the intended direction of movement of plant material of at least 5 cm, or at least 10 cm, or at least 20 cm. This may assist guiding the plant material for a non-negligible amount of its journey.

In embodiments (for example as shown in Fig. 3) the guide element(s) 60 of the static guide 30 may define at least one path 61 (opening) for plant material to pass along (through) whilst in the intended orientation (for example with plant stalks oriented across the plurality of rollers 10, 11 for example as shown in Fig. 3, or with plant stalks oriented along the plurality of rollers 10, 11). In embodiments, the width of the path 61 (opening) is sized to permit plant material to pass through with plant stalks along the path 61 (towards the opening) but not with plant stalks substantially aligned perpendicular to the path 61 (opening) 61.

In embodiments, the path (opening) 61 has a width of at most 30 cm, or at most 20 cm, or at most 10 cm. In embodiments, a static guide 30 defines plural adjacent paths (openings) 61 (in a direction along the length L of the rollers 10, 11) for plant material to pass through.

Static guide(s) 30 could be constructed in any suitable and desired way. For example, the static guide(s) could be formed of one or more (metal) elements (e.g. metal plates) 60, for example provided adjacent one another to define paths 61 for the plant material therebetween (for example, as illustrated in Fig. 3).

However, it will be appreciated that static guide means 30 could be constructed in other ways if desired, for example using rods (guide rails), chains, curtains or other guide means. Static guide(s) could be constructed of any suitable and desired material (for example such as metal, plastic, ceramic, cloth, nonwoven material, or any other suitable and desired material).

In embodiments, the apparatus comprises a cutter 70 (a cutting means) (for example as part of a cutting station (cutting region of the apparatus) 71) for cutting a top off of plant material 1 which is to be processed (before it is processed) using the plurality of rollers 10 comprising counter-rotating rollers 11.

In this regard, the "top" of the plant material 1 corresponds to the "top" of the plant as it grows. The "top" which is cut off may comprise at least part of the plant stalk and any associated leaves, for example so that at least a top 5%, or at least a top 10%, or a least a top 15% of the plant stalk is cut off.

In this regard, the Applicant has recognised that the leaves nearer the top of the plant may be younger and more resistant to removal from the plant stalk by pulling. As a result, there is a risk that, when pulled by counter-rotating rollers, such leaves will not be removed, and could instead cause the plant stalk to be pulled away from its intended direction of movement and/or orientation. Thus, providing a cutter which cuts off the top of plant material can assist with allowing plant material to move in its intended direction and/or orientation when moved relative to the plurality of rollers.

In embodiments, a cutter 70 (cutting station 71) is provided at a position before the plurality of rollers 10 (along the intended path of plant material through the apparatus). In embodiments, a cutter 70 (cutting station 71) is provided as part of a (moving) infeed 20 to the plurality of rollers 10 (for example as indicated in Fig. 5).

In embodiments a cutter 70 (cutting station 71) may be provided upstream of (adjacent) the first longitudinal end 18 of the rollers 10, 11 (so that so that plant material 1 can then be transported in a direction substantially along the length L of the rollers 10, 11) (this is illustrated in Figs. 4 and 5 for example).

In such embodiments, the cutting station 71 may be configured (sized and positioned) to cut tops off of plant stalks 2 whilst plant stalks are oriented in a direction across (perpendicular to the axes of the) the plurality of rollers 10. In this way, cut plant stalks be transferred (moved) directly from the cutting station 71 to the rollers 10, 11 for defoliation (without needing to change the orientation of the plant stalks)

However, it would alternatively or additionally be possible to provide a cutter 70 (cutting station 71) upstream of (adjacent) a first roller 8, for providing plant material 1 to the first roller 8 (so that plant material 1 can then be transported in a direction across successive rollers 10, 11, from the first roller 8 to the last roller 9 in the sequence).

The cutter 70 could be any suitable and desired mechanically operated cutter, for example comprising a cutting blade 73 (for example a pair of rotating disk blades through which plant material is passed, for example as illustrated in Fig. 7). However, other types of cutter could alternatively be used.

In embodiments, the apparatus comprises a collection means for collecting plant tops which have been cut off by the cutter 70.

The plant top collection means 25 may be any suitable and desired type of collection means, such as for example a bin, chute, conveyor or other collecting means.

In embodiments, the plant top collection means comprises a powered conveyor, configured to convey (transport) plant tops away from the cutter 70 (cutting station 71).

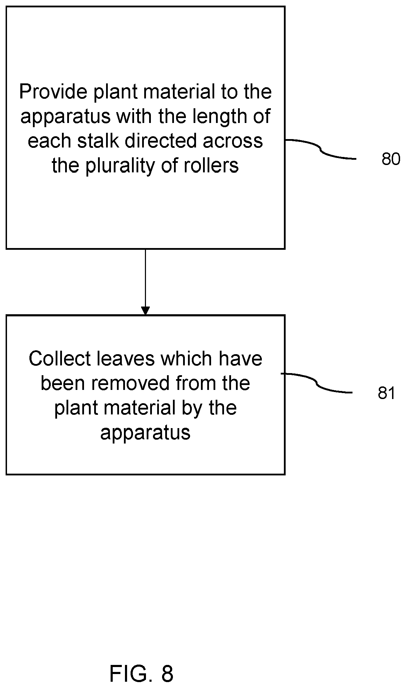

Fig. 8 is a flowchart showing method steps when using apparatuses of the present disclosure.

The method in embodiments comprises providing plant material 1 to the apparatus (to the plurality of rollers 10), in embodiments so that each stalk is directed across (extends perpendicular to the axes of the rollers 10) (step 80).

The plant material which is provided to the apparatus could be freshly cut, substantially unprocessed, plant material (with the leaves removed by the apparatus then being cured to reduce moisture content). Alternatively, and in embodiments, plant material which has been cured to reduce moisture content may be provided to the apparatus (to be defoliated by the apparatus). Fig. 12 shows example leaves from plant material (in this case, from tobacco plants) that has been cured to reduce moisture content.

In embodiments, providing plant material 1 to the apparatus (to the plurality of rollers 10) comprises providing successive plant stalks whilst the apparatus is powered (whilst the counter-rotating rollers 11 are powered to rotate), so that the apparatus (the rotation of counter-rotating rollers 11) is not halted between successive plants.

In embodiments, providing plant material 1 to the apparatus (to the plurality of rollers 10) comprises providing plant material 1 so that plural plants are moved (transported) by the plurality of rollers 10 at the same time.

In embodiments, providing plant material 1 to the apparatus (to the plurality of rollers 10), comprises providing plant material 1 to a first roller 8 (of the plurality or rollers 10) so that plant material 1 is transported in a direction across successive rollers 10, 11, from the first roller 8 to the last roller 9 in the sequence. This is illustrated in Fig. 2 for example.

In embodiments, providing plant material 1 to the apparatus (to the plurality of rollers 10), comprises providing plant material to a first longitudinal end 18 of the rollers 10, 11, so that that so that plant material 1 is then transported in a direction substantially along the length L of the rollers 10, 11. This is illustrated in Fig. 4 for example.

In embodiments, providing plant material 1 to the apparatus (to the plurality of rollers 10), comprises providing plant material 1 to an infeed 20 for the plurality of rollers 10.

As plant material is transported relative to the rollers 10, 11, leaves 3 are pulled away from plant stalks 2 by the pair(s) of counter-rotating rollers 11.

The method in embodiment comprises collecting leaves 3 which have been removed from the plant material 1. This may be done using a leaf collection means 24 for example of the type discussed above.

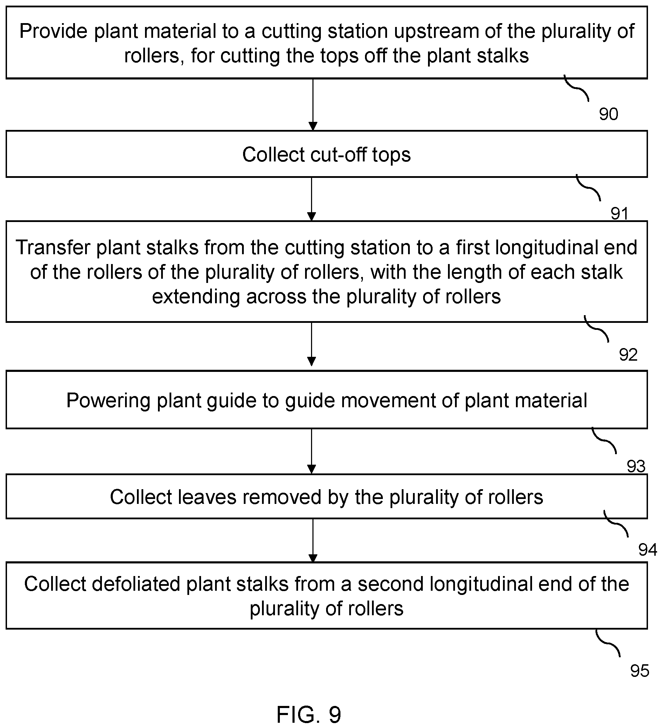

Fig. 9 is a flowchart showing further method steps which may be used when operating apparatuses of the present disclosure.

In this regard, the method in an embodiment comprises provide plant material 1 to a cutter 70 (cutting station 71) upstream of the plurality of rollers 10, and cutting the tops off the plant stalks 2 (step 90) for example cutting the tops off of one or more plants provided successively to the cutter 70.

The method in an embodiment comprises collecting the cut-off tops of the plants (step 91) for example using a plant top collection means.

The method in an embodiment comprises transferring plant stalks 2 (for example transferring successive plants stalks) from the cutter 70 (cutting station 71) to the plurality of rollers 10 (for example to a first longitudinal end 18 of the rollers 10), with the length of each stalk 2 extending across perpendicular to the axes of the plurality of rollers 10 (step 92).

The method (in embodiments where the apparatus comprises one or more powered guides 30) may comprise powering the guide(s) 30 to guide movement of plant material relative to the plurality of rollers 10 (step 93). The guide(s) may be powered continuously to guide successive plants (without being halted between successive plants).

The method in an embodiment comprises collecting leaves 3 which have been removed from the plant material 1 (step 94). This may be done using a leaf collection means 24 for example of the type discussed above.

The method in an embodiment comprises collecting defoliated plant stalks 2 (step 95), in embodiments from a second longitudinal end 19 of the plurality of rollers 10. This may be done using a plant stalk collection means 23, for example of the type discussed above.

As noted above, the above example combinations of features are illustrative only, and the skilled person will form many other potential combinations of features based on the teachings described herein.

For example, it will be appreciated by a skilled person that the various components of the apparatus described herein may be provided together in any suitable and desired way, for example being held in place by a suitable support structure (frame) for the apparatus.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future.

## Claims

1. An apparatus for processing plant material to remove leaves from a plant stalk, the apparatus comprising:
a plurality of rollers, the plurality of rollers comprising at least one pair of counter-rotating rollers configured to pull leaves away from a plant stalk as it moves relative to the plurality of rollers; and
a guide for guiding movement of plant material relative to the plurality of rollers.

2. The apparatus of claim 1, wherein the apparatus is configured so that plant material passes between the guide and the plurality of rollers.

3. The apparatus of claim 1 or claim 2, wherein the guide is powered to move so as to bias movement of plant material relative to the plurality of rollers.

4. The apparatus of any one of the preceding claims, wherein the guide comprises any of: one or more rollers; one or more conveyor belts; one or more chain conveyors.

5. The apparatus of any one of the preceding claims, wherein the guide comprises one or more resiliently deformable portions for contacting the plant material.

6. The apparatus of any one of the preceding claims, wherein a roller of the pair of counter-rotating rollers has an outer surface comprising a raised and/or recessed element to assist with gripping plant leaves.

7. The apparatus of claim 6, wherein the raised and/or recessed element extends in both the axial direction and the circumferential direction of the roller.

8. The apparatus of claim 6 or 7, wherein the raised and/or recessed member extends helically along at least part of the roller.

9. The apparatus of any one of the preceding claims, wherein the plurality of rollers are arranged, such that in use the counter-rotating rollers pull leaves beneath the plurality of rollers.

10. The apparatus of any one of the preceding claims, comprising one or more of:
a leaf collection means for collecting leaves removed from plant stalks by the at least one pair of counter rotating rollers; and
a stalk collection means for collecting stalks which have moved past the plurality of rollers.

11. The apparatus of any one of the preceding claims, wherein the plurality of rollers are configured to receive plant stalks oriented in a direction extending across the plurality of rollers.

12. The apparatus of any one of the preceding claims, comprising an infeed to the plurality of rollers, the infeed arranged at a first longitudinal end of the plurality of rollers, so that in use plant material is moved along a length of the rollers from the first longitudinal end to a second longitudinal end of the rollers.

13. The apparatus of any one of the preceding claims, comprising a cutter for cutting a top off of a plant stalk before the plant stalk is provided to the plurality of rollers.

14. A method of processing plant material to remove leaves from a plant stalk, the method comprising providing plant material to the apparatus of any of claims 1 to 13.

15. The method of claim 14, comprising continuously operating the apparatus whilst supplying successive plants to the apparatus.
